# EUROPEAN PATENT APPLICATION

(11) **EP 4 242 135 A1**
(43) Date of publication of application: **13.09.2023**
(21) Application number: 22161669.1
(22) Date of filing: 11.03.2022
(51) Int. Cl.: B65G 1/00, B65G 1/02, B65G 65/00, B65G 69/04, B65G 1/137

(54) **SYSTEM FOR ARRANGING OBJECTS IN CONTAINERS**

(71) Applicant: MO.S.A.I.C. - Motion System and Information Control S.r.l., 03039 Sora (Fr) (IT)
(72) Inventor: D'Agostino, Massimiliano, 00171 Roma (IT); Rombolà, Matteo, 89862 Drapia (VV) (IT); Castelli, Gianni, 03040 Ausonia (FR) (IT)
(74) Representative: Postiglione, Ferruccio

(57) **Abstract**

The present invention relates to a system (1) for arranging items in containers comprising a plurality of processing stations (11) for filling removable containers, wherein each of the processing station (11) is able to house a single of the removable containers and comprises a movable tray (211), able to support a respective of the removable containers, moving means of the movable tray (211) with respect to the processing station (11) and a conveyor (111), provided with an entry portion (111') and with an exit portion (111") of the items, wherein the conveyor (111) is arranged at a distance from the movable tray (211) such that the exit portion (111") remains above the opening of a respective of the removable containers, wherein the moving means are able to operate a shaking of the movable tray (211) at least along opposite directions of a predefined axis of shaking to arrange the items in the removable container in a homogeneous way.

## Description

### Field of the invention

The present invention relates to the field of warehouse and distribution center management. In particular, the present invention relates to a system for arranging items in containers.

### Background art

The modern distribution centre is becoming increasingly automated and digitalised, also known as Industry 4.0. Transforming to more digitalisation in the warehouse leads to fewer human interactions and greater levels of automated storage and robotised order picking.

Modern factories, warehouses and distribution centers rely on containers called warehouse totes or bins to store and move items during the manufacturing and order-picking processes. These containers are typically constructed of cardboard or durable plastic.

At the inbounding phase, trucks arrive with boxes of items that are usually manually put into totes. Different than the organized storage system, items can be simply shelved where they fit, so it is possible to place items in totes at random by storing information about the contents with barcodes. So, despite the seeming randomness, computers can instantly locate inventory.

Conveyors route the totes to different parts of the warehouse, where they are unloaded.

Again, in a picking phase an item is collected from the inbounding tote to be placed in a new tote according to a specific order or to a different allocation which could be desired.

Conveyors send totes to many locations: on to packaging, to other areas in the building, or to other fulfillment centers.

In the packing phase, items arrive at packing stations in totes, ready to be packed, therefore are from totes and then packed into boxes.

In most warehouses and distribution centers there is tight robot-human collaboration. As technology continues to improve, many firms will look to reduce costs, and improve speed and accuracy through mechanized systems, while leveraging humans for more complex tasks requiring problem solving or dexterity.

Nevertheless, one of the big issues is related to the storing space. In particular, storing items into the warehouse through containers such as totes or bins can bring the available space to be rapidly consumed. In particular, the arrangement of items into containers leaves a lot of free space into the containers themselves, such a free space being a waste with respect to the cost-reduction policies.

It would therefore be desirable to have system capable of minimizing the drawbacks described above.

In particular, it would be desirable to have a system which could be used for arranging items in containers, such as totes and bins, in a more accurate way, which would allow a reduction in the waste of free space to allocate the items, as well as less a reduction of time for the allocation to be completed.

Furthermore, it would be desirable to have a system capable of achieving a significant cost saving during the allocation operations of items in containers.

### Summary of the Invention

An object of the present invention is to provide a system for arranging items in containers capable of minimizing the aforesaid problems.

The aforesaid object is achieved by a system for arranging items in containers according to the attached claims.

The system for arranging items in containers is characterized in that it comprises a plurality of processing stations for filling removable containers, wherein each of the processing station is able to house a single of the removable containers and comprises:
- a movable tray, able to support a respective of the removable containers;
- moving means of the movable tray with respect to the processing station;
- a conveyor, provided with an entry portion and with an exit portion of the items, wherein the conveyor is arranged at a distance from the movable tray such that the exit portion remains above the opening of a respective of the removable containers;
   wherein the moving means are able to operate a shaking of the movable tray at least along opposite directions of a predefined axis of shaking to arrange the items in the removable container in a homogeneous way.

In a further embodiment, the processing station comprises a fixed seat operatively connected to the movable tray,
wherein the moving means comprise shaking guides for the movable tray, and
wherein the shaking guides are secured to the fixed seat and interposed between the fixed seat and the movable tray so that the moving means are able to operate the shaking of the movable tray along opposite directions of the predefined axis of shaking defined by, or parallel to, the shaking guides with respect to the fixed seat.

In a further embodiment, the moving means comprise an actuator operatively connected to the movable tray to operate the shaking along opposite directions of the predefined axis of shaking defined by the piston rod of the actuator.

In a further embodiment, the actuator is of pneumatic type, and
wherein the moving means comprise a pneumatic solenoid valve operatively connected to the actuator to operate the double-acting of the actuator along the opposite directions of the predefined axis of shaking.

In a further embodiment, the system comprises a single pneumatic circuit operatively connected to all of the solenoid valves.

In a further embodiment, the conveyor is of an idle roller type.

In a further embodiment, the conveyor has an inclination with respect to a floor plane comprised between 5° and 25°, preferably between 10° and 20°, more preferably equal to 15°.

In a further embodiment, each of the processing station comprises one or more presence sensors of the items, and
wherein the moving means are operated when the presence sensors detect the items.

In a further embodiment, the presence sensor is arranged at the exit portion of the conveyor, and
wherein the moving means are operated when the presence sensors detect the items at the exit portion.

In a further embodiment, the moving means are able to operate the shaking of the movable tray with a predefined shaking speed.

In a further embodiment, the predefined shaking speed is set with a single value according to the predefined number of shakings or is set with a different value for one or more of the shakings for each of the items.

In a further embodiment, the moving means are able to operate the shaking of the movable tray for a predefined number of shakings for each of the items.

In a further embodiment, the predefined number of shakings is comprised between two and ten, preferably between three and nine, more preferably is equal to six.

In a further embodiment, the processing stations are arranged in succession along a column.

In a further embodiment, the processing stations are arranged in succession along a row by alternating the column.

### Description of the figures

These and further features and advantages of the present invention will become apparent from the disclosure of the preferred embodiment, illustrated by way of non-limiting example in the appended drawings, wherein:
- Figure 1 is a front plan view of the preferred embodiment of the system for arranging items in containers, according to the present invention;
- Figure 2 is a rear plan view of the system for arranging items in containers of Figure 1;
- Figure 3 is a lateral plan view of the system for arranging items in containers of Figure 1;
- Figure 4 is front perspective view of a processing station of the system for arranging items in containers of Figure 1;
- Figure 5 is rear perspective view of a processing station of the system for arranging items in containers of Figure 1.

### Detailed description of the invention

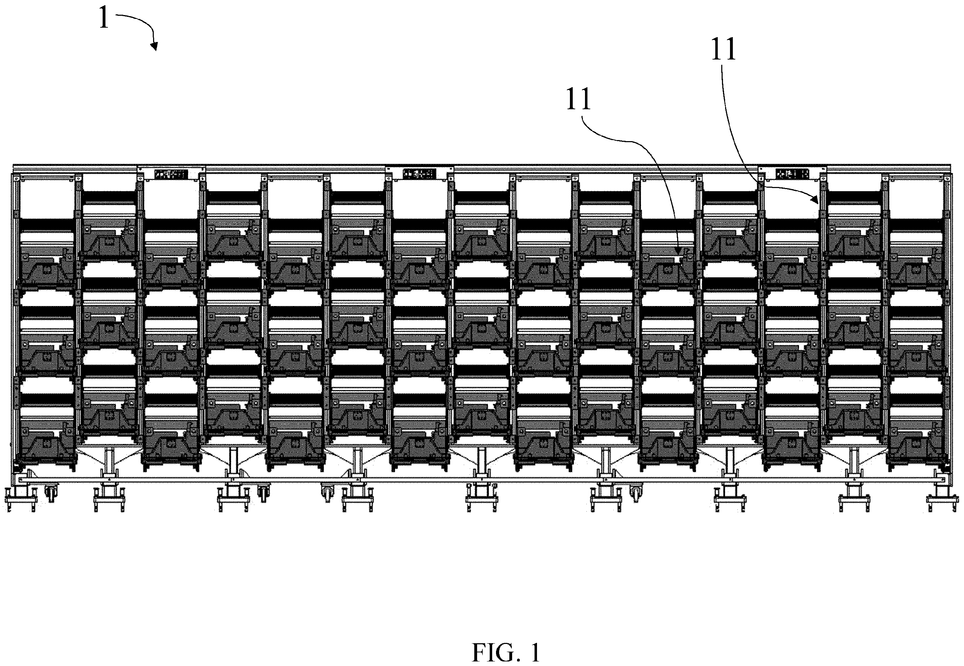

With reference to Figures 1 to 5, a preferred embodiment of the system 1 for arranging items in containers, according to the present invention, is illustrated.

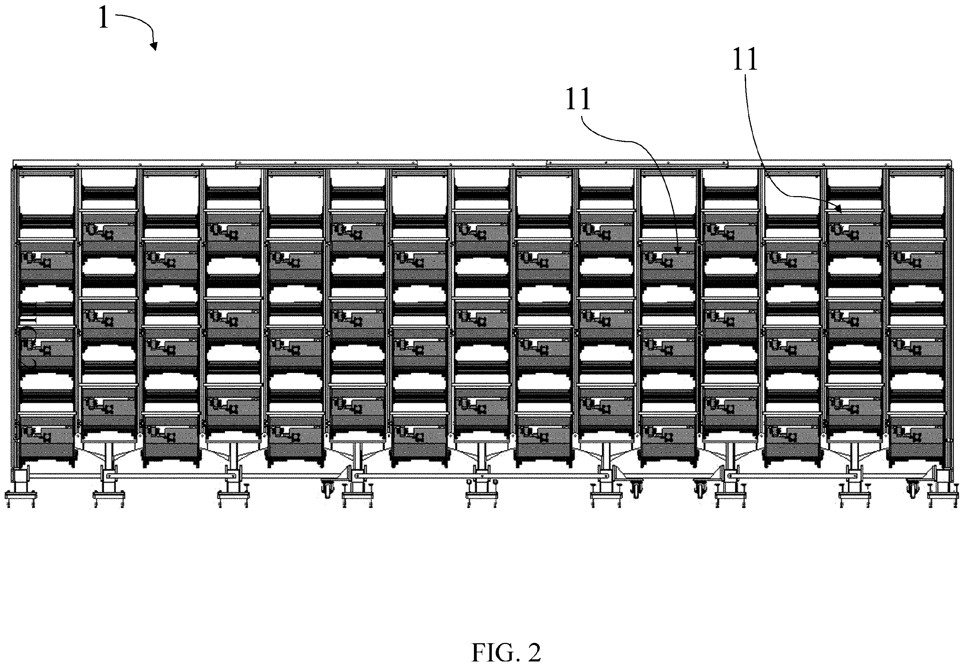

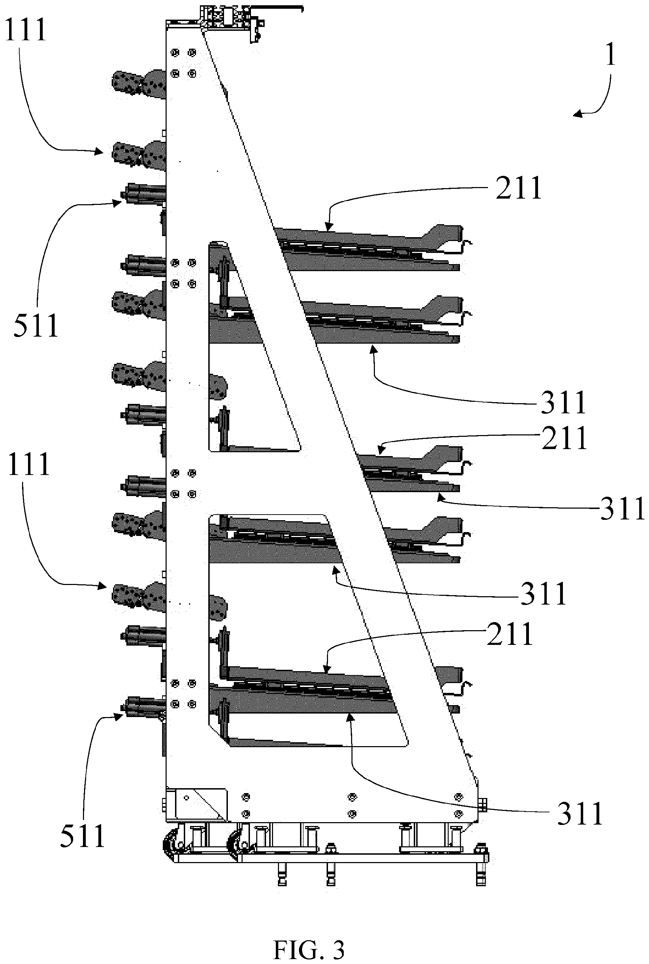

Figure 1 illustrates a front plan view of the system 1 for arranging items in containers, according to the present invention. The same system for arranging items in containers 1 is illustrated in Figures 2 and 3, respectively in a rear plan view and in a lateral plan view.

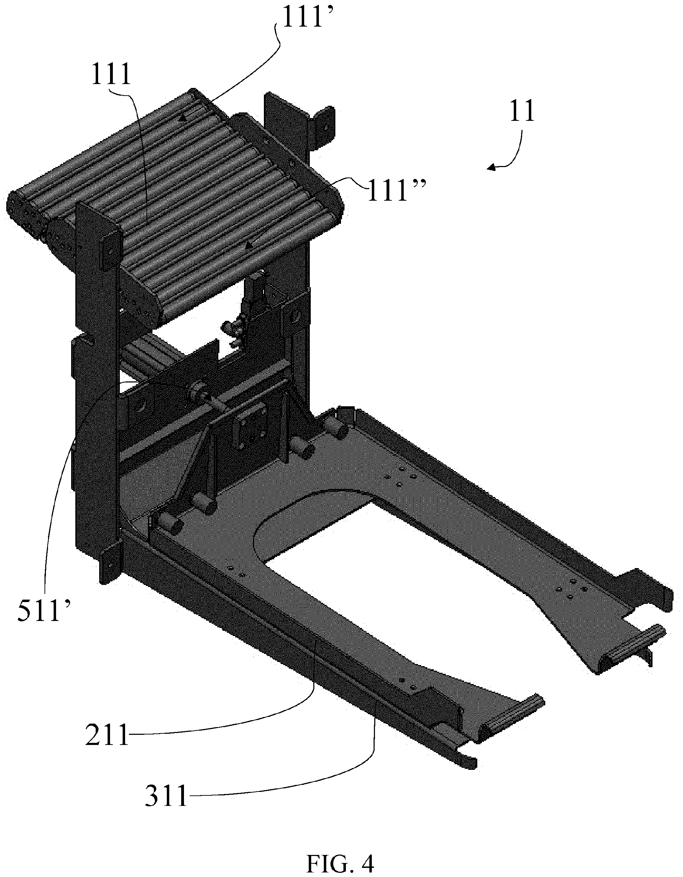

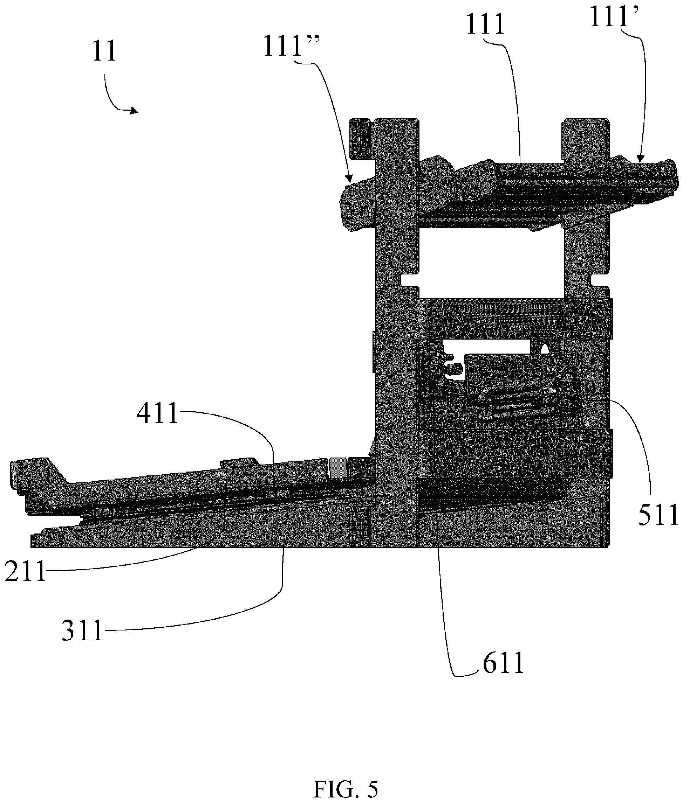

The system 1 for arranging items in containers according to the embodiment comprises a plurality of processing stations 11, as illustrated in greater details in Figures 4 and 5. Such processing stations 11 are able to operate on removable containers (not illustrated), such as warehouse totes or warehouse bins. According to the present invention, each processing station 11 is able to house a single of the removable containers, so that to fill it with items.

In particular, the system 1 of the preferred embodiment herewith described comprises a number equal to forty-five processing stations 11, but any number of processing station can be provided according to different embodiments.

The arrangement according to the present embodiment comprises a plurality of processing stations 11 arranged in succession along a column. In particular, the system 1 for arranging items in containers is provided with three processing stations 11 arranged in succession on a same column with a plurality of columns disposes side-by-side. In particular, being forty-five processing stations 11 in total, a number equal to fifteen columns are provided.

Moreover, the same arrangement according to the present embodiment comprises a plurality of processing stations 11 arranged in succession along a row by alternating column. In particular, the system 1 for arranging items in containers is provided with a plurality of processing stations 11 arranged in succession by alternating column along the same row, therefore not disposed side-by-side. In particular, being forty-five processing stations 11 in total, the first row, corresponding to the row having the greater distance from the floor plane, has seven processing stations 11, starting from the second column and arranged in succession by alternating column up to the second last column. The second row, just below the first row in the direction of the floor plane, has eight processing stations 11, starting from the first column and arranged in succession by alternating column up to the last column. The third row, just below the second row, corresponds to the first one, as well as it corresponds the fifth (and second last) row. Finally, the fourth row corresponds to the second one, as well as it corresponds the sixth (and last) row.

According to different embodiments, not illustrated, it is possible to define different arrangements for the processing stations, either in terms of number of rows or columns or in terms of positioning of the processing stations in the same rows or columns.

Each of the processing stations 11 is provided with a movable tray 211, able to support a respective of the removable containers, and is provided with moving means of the same movable tray 211 with respect to the processing station 11. In particular, the moving means are able to operate a shaking of the movable tray 211 at least along opposite directions of a predefined axis of shaking to arrange the items in the removable container in a homogeneous way.

The moving means are able to operate the shaking of the movable tray 211 with a predefined shaking speed. Such a speed can be set with a single value according to the predefined number of shakings or can set with a different value for one or more of the shakings for each of said items. The value of the predefined shaking speed, as well as any change of value between items of for a single item can be set by a central control unit (for example a PLC) which can be part of the system 1 according to the present invention or can be a component of a different system in the warehouse to which the system 1 according to the present invention is operatively connected.

Moreover, the moving means are able to operate the shaking of the movable tray 211 for a predefined number of shakings for each of the items. Therefore, more than a single shaking is operated for each item which is arranged in the container to allow a better allocation of the free space inside the container itself. Preferably, the predefined number of shakings is comprised between two and ten, preferably between three and nine, more preferably is equal to six which has been recognized to be the most suitable value to obtain a well allocation while maintaining a reduced time of operation for each single item collected into the container.

The movable tray 211 is defined by a substantially U-shaped body to support the perimetral sides of the movable containers and is provided with locking elements to secure the movable containers during the shaking. The movable tray 211 is also provided with absorption elements having the task to attenuate the impacts at the end of stroke in the opposite directions. Different shapes of the movable tray can be defined according to different embodiments (not illustrated).

In the embodiment herewith illustrated, the moving means comprise an actuator 511 operatively connected to the movable tray 211 to operate the shaking, corresponding to the translation of the movable tray 211 itself, along opposite directions of the predefined axis of shaking defined by the piston rod 511' of the actuator 511. Therefore, the piston rod 511' defines the aforementioned predefined axis of shaking, while the piston stroke between the opposite ends stroke of the piston rod 511' defines the stroke of the two opposite directions. The actuator 511, as well as its piston rod 511' is positioned centrally to the movable tray 211 so that the force exerts to the movable tray 211 by the movement of the piston rod 511' is balanced.

As illustrated in Figure 5, the moving means comprise a pneumatic solenoid valve 611 operatively connected to said actuator 511 to operate the double-acting of said cylinder. In this regard, the actuator 511 is of pneumatic type, therefore the movement of the piston rod 511', and of the movable tray 211 consequently, is pneumatically operated. The pneumatic solenoid valve 611 is preferably of a 5/2 monostable type, but different kind of valve can also be used.

To have a single operation for all the actuators 511, the system 1 according to the present invention, comprises a single pneumatic circuit (not illustrated) operatively connected to all of the solenoid valve 611. In this way, the position of the piston rod 511' of the actuators 511 is set by the position assumed by solenoid valve 611 and can be controlled by a central control unit (for example a PLC) which can be part of the system 1 according to the present invention or can be a component of a different system in the warehouse to which the system 1 according to the present invention is operatively connected.

According to different embodiments, not illustrated, the actuator can be of a different type or can be positioned differently, as well as a greater number of actuators can be used for a single movable tray.

Each of the processing stations 11 is also provided with a conveyor 111, provided with an entry portion 111' and with an exit portion 111" of the items, wherein the conveyor 111 is arranged at a distance from the movable tray 211 such that the exit portion 111" remains above the opening of a respective of the removable containers. Therefore, the conveyor 111 is arranged at a distance from the movable tray 211, in particular the distance being at least equal to the height of the movable container to be used. On the contrary, the entry portion 111' is positioned to face a side of the system 1 according to the present invention which receives the items to be stored in containers.

The conveyor 111 is preferably of an idle roller type to allow sliding of items from entry portion 111' to exit portion 111" in a simple and inexpensive way. In this regard, the conveyor 111 has an inclination with respect to a floor plane comprised between 5° and 25°, to better provide the sliding through rollers. For a better function, the inclination is preferably comprised between 10° and 20°, more preferably is equal to 15°.

Different kinds of conveyor can be employed according to different embodiments.

In the preferred embodiment the processing station 11 is provided with a fixed seat 311 operatively connected to the movable tray 211, as above described. In this regard, the moving means comprise shaking guides 411 for the movable tray 211, as illustrated in greater detail in Figure 5. Such shaking guides 411 are secured to the fixed seat 311 and interposed between the fixed seat 311 and the movable tray 211 so that the moving means are able to operate the shaking of the movable tray 211 along opposite directions of the predefined axis of shaking defined by, or parallel to, the shaking guides with respect to the fixed seat 311. According to the preferred embodiments, the shaking guides 411 are defined by a pair of rails arranged side by side and fixed to corresponding opposite portions of the fixed seat 311. Correspondingly, the movable tray 211 is provided with a pair of guide elements arranged side by side on opposite portions of the movable tray 211 itself such that to match with the guides secured to the fixed seat 311.

According to the preferred embodiment herewith described, the processing station 11 also comprises one or more presence sensors of the items. Preferably, such presence sensors (not illustrated) are arranged at the exit portion 111" of the conveyor 111. Taking into account the data from the presence sensors, the moving means are operated when the presence sensors detect the items, in particular when the presence sensors detect the items at the exit portion 111", thus allowing an automatic shaking of the movable tray 211. In this regard, as already described for further components, the evaluation of data from the presence sensors, as well as the operation of the moving means, can be managed by a central control unit (for example a PLC) which can be part of the system 1 according to the present invention or can be a component of a different system in the warehouse to which the system 1 according to the present invention is operatively connected.

Therefore, items to be stored in containers are moved towards the idle conveyor rollers 111. The latter, having an inclination of 15°, allows the sliding of the items towards the movable container positioned in the processing station 11 in the movable tray 211, then let the item falling into the movable container.

In the final part of the idle conveyor roller 111 the presence sensors detect the item which is sliding and activate the moving means to define the shaking movement of the movable tray 211. Such a shaking involves, therefore, first the final section of the sliding and the arrangement of the item into the movable container when already fallen into it.

The number of the shakings occurred, or translation along the predefined axis of shaking, as well as the speed value for the shaking, determine the movement of the movable container and, consequently, the movement of the items arranged inside.

Each solenoid valve 611 is dedicated to the operation of the corresponding actuator 511 in the processing station 11, wherein preferably six shaking translating are carried out with a variable speed for each movable tray 211.

The system for arranging items in containers according to the present invention allows, therefore, to convey items supplied in the warehouse and to position them inside movable containers, or totes or bins, in a homogeneous way.

## Claims

1. A system (1) for arranging items in containers **characterized in that** it comprises a plurality of processing stations (11) for filling removable containers,
wherein each of said processing station (11) is able to house a single of said removable containers and comprises:
- a movable tray (211), able to support a respective of said removable containers;
- moving means of said movable tray (211) with respect to said processing station (11);
- a conveyor (111), provided with an entry portion (111') and with an exit portion (111") of said items, wherein said conveyor (111) is arranged at a distance from said movable tray (211) so as said exit portion (111") remains above the opening of a respective of said removable containers;
wherein said moving means are able to operate a shaking of said movable tray (211) at least along opposite directions of a predefined axis of shaking to arrange said items in said removable container in a homogeneous way.

2. The system (1) for arranging items in containers according to claim 1, wherein said processing station (11) comprises a fixed seat (311) operatively connected to said movable tray (211),
wherein said moving means comprise shaking guides (411) for said movable tray (211), and
wherein said shaking guides (411) are secured to said fixed seat (311) and interposed between said fixed seat (311) and said movable tray (211) so that said moving means are able to operate said shaking of said movable tray (211) along opposite directions of said predefined axis of shaking defined by, or parallel to, said shaking guides with respect to said fixed seat (311).

3. The system (1) for arranging items in containers according to claim 1 or 2, wherein said moving means comprise an actuator (511) operatively connected to said movable tray (211) to operate said shaking along opposite directions of said predefined axis of shaking defined by the piston rod (511') of said actuator (511).

4. The system (1) for arranging items in containers according to claim 3, wherein actuator (511) is of pneumatic type, and
wherein said moving means comprise a pneumatic solenoid valve (611) operatively connected to said actuator (511) to operate the double-acting of said cylinder.

5. The system (1) for arranging items in containers according to claim 3 and 4, wherein the system (1) comprises a single pneumatic circuit operatively connected to all of said solenoid valve (611).

6. The system (1) for arranging items in containers according to one of claims from 1 and 5, wherein said conveyor (111) is of an idle roller type.

7. The system (1) for arranging items in containers according to one of claims from 1 and 6, wherein said conveyor (111) has an inclination with respect to a floor plane comprised between 5° and 25°, preferably between 10° and 20°, more preferably equal to 15°.

8. The system (1) for arranging items in containers according to one of claims from 1 and 7, wherein each of said processing station (11) comprises one or more presence sensors of said items, and
wherein said moving means are operated when said presence sensors detect said items.

9. The system (1) for arranging items in containers according to claim 8, wherein said presence sensor is arranged at said exit portion (111") of said conveyor, and
wherein said moving means are operated when said presence sensors detect said items at said exit portion (111").

10. The system (1) for arranging items in containers according to one of claims from 1 and 9, wherein said moving means are able to operate said shaking of said movable tray (211) with a predefined shaking speed.

11. The system (1) for arranging items in containers according to claim 10, wherein said predefined shaking speed is set with a single value according to the predefined number of shakings or is set different with a different value for one or more of said shakings for each of said items.

12. The system (1) for arranging items in containers according to one of claims from 1 and 11, wherein said moving means are able to operate said shaking of said movable tray (211) for a predefined number of shakings for each of said items.

13. The system (1) for arranging items in containers according to claim 12, wherein said predefined number of shakings is comprised between two and ten, preferably between three and nine, more preferably is equal to six.

14. The system (1) for arranging items in containers according to one of claims from 1 and 13, wherein said plurality of processing station (11) are arranged in succession along a column.

15. The system (1) for arranging items in containers according to one of claims from 1 and 14, wherein said plurality of processing station (11) are arranged in succession along a row by alternating the column.
